# EUROPEAN PATENT APPLICATION

(11) **EP 0 616 296 A2**
(43) Date of publication of application: **21.09.1994**
(21) Application number: 94301416.7
(22) Date of filing: 28.02.1994
(51) Int. Cl.: G06K 9/20

(54) **Method and apparatus for processing documents**

(30) Priority: 18.03.1993 GB 9305554
(71) Applicant: NCR International, Inc., Dayton, Ohio 45479 (US)
(72) Inventor: Sharman, David B., Kinross, Tayside, Scotland (GB); Zuckert, Derek, Edinburgh, West Lothian, Scotland (GB)
(74) Representative: Robinson, Robert George

(57) **Abstract**

In a method and apparatus for processing documents (30), a digital image of each document (30) is captured and stored in a memory (70). A feature model is formed from the stored image by extracting graphical features such as horizontal lines and/or boxes from the stored image, and this feature model is compared with stored feature models from an identification feature file (80) to identify the type of the document. The identification information is used to select, from a document definition file (82), an appropriate document description for identifying document zones to be read, and, from a library of image processing utilities (84), an appropriate processing utility, such as a data recognition utility to recognize the information read from such zones. The invention has an application to a self-service document processing terminal (10) for processing documents such as cheques (100) to be deposited or bills (150) to be paid.

## Description

This invention relates to a method of processing documents of a plurality of types.

The invention also relates to apparatus for processing documents of a plurality of types.

The processing by financial institutions, such as banks, of financial documents such as cheques to be deposited and bills to be paid is a costly and time-consuming operation, and can often involve a customer wishing to perform a financial transaction, such as depositing a cheque or paying a bill, in a long waiting time to receive the attention of a bank teller to perform the transaction. The financial documents handled by the bank teller may be of many different types with differing information layouts, and contain information which may be handwritten or printed in any one of a wide variety of typefonts.

It is an object of the present invention to provide a method and apparatus for processing documents wherein information contained in various locations on a variety of different document types can be automatically extracted and processed.

Therefore, according to one aspect of the present invention, there is provided a method of processing documents of a plurality of types, including the steps of: forming a digital image of a document to be processed; and storing the digital image, characterized by the steps of: extracting from the stored digital image graphical features of said document; identifying the document type to which said document belongs on the basis of the extracted graphical features; utilizing the identified document type to select an appropriate stored document description; utilizing the selected document description to select at least one zone of the stored digital image and to select an image processing program; and processing the information contained in the selected zone or zones in the stored image using the selected image processing program.

According to another aspect of the present invention, there is provided apparatus for processing documents of a plurality of types, including transport means adapted to move a document; imaging means adapted to provide digital image signals representing an image of said document; and image storage means adapted to store said image signals, characterized by processing means coupled to said image storage means and adapted to extract graphical features from the stored image of said document and to compare the extracted graphical features with corresponding graphical features associated with a plurality of document feature models arranged in a first file stored in first memory means, to identify the document type to which the document belongs; second memory means for storing a second file of document zone descriptions and adapted to provide location information for at least one zone on the document containing data to be processed and parameters defining the properties of data contained within the respective zones; third memory means for storing a library of image processing programs for performing image processing functions; and control means adapted to utilize said parameters to select an appropriate image processing program from said library of image processing programs for processing the data contained in said at least one zone.

It will be appreciated that a method and apparatus according to the present invention provides a particular advantage in a self-service document processing terminal where there are a large number of document types capable of being processed, since it is impractical for the terminal user to manually enter information identifying the document type or data location and properties of such data. The method and apparatus according to the present invention enable documents of a variety of types to be automatically processed by such a self-service terminal.

One embodiment of the present invention will now be described by way of example, with reference to the accompanying drawings, in which:-
Fig. 1 is a perspective view of a self-service document processing terminal incorporating the present invention;
Fig. 2 is a simplified diagram illustrating the passage of a document through the terminal shown in Fig. 1;
Fig. 3 is a block diagram showing the interconnection of components employed in the terminal of Fig. 1;
Fig. 4 shows a cheque capable of being processed by the terminal of Fig. 1;
Fig. 5 shows a bill capable of being processed by the terminal of Fig. 1;
Fig. 6 is a flowchart illustrating the selection of a transaction type by a customer operating the terminal of Fig. 1;
Fig. 7 is a flowchart illustrating the processing of a cheque by the terminal of Fig. 1;
Fig. 8 is a flowchart illustrating the processing of a bill by the terminal of Fig. 1;
Fig. 9 is a flowchart illustrating the procedure for automatically identifying the type of document being processed by the terminal of Fig. 1; and
Fig. 10 is a flowchart illustrating the processing of information extracted from a document being processed by the terminal of Fig. 1.

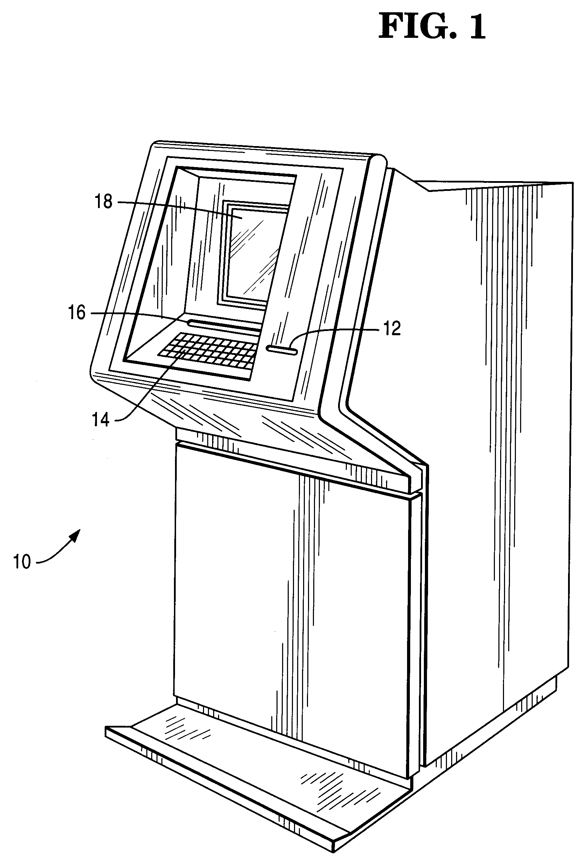

Referring first to Fig. 1, there is shown a perspective view of a self-service document processing terminal 10 incorporating the present invention. The terminal 10 is a self-service device adapted for operation by a customer for the purpose of paying bills, depositing cheques or printing a statement of the customer's account. It will be appreciated that the terminal 10 is connected in operation to a data processing circuitry (not shown) suitable for electric funds transfer, whereby the customer's account can be automatically debited, credited or read out.

The terminal 10 includes a slot 12 for entry of the customer's banking card, a keyboard 14 for entry of information and control functions, a slot 16 for receiving a bill to be paid or a cheque to be deposited and for delivering a statement to a customer, and a display screen 18.

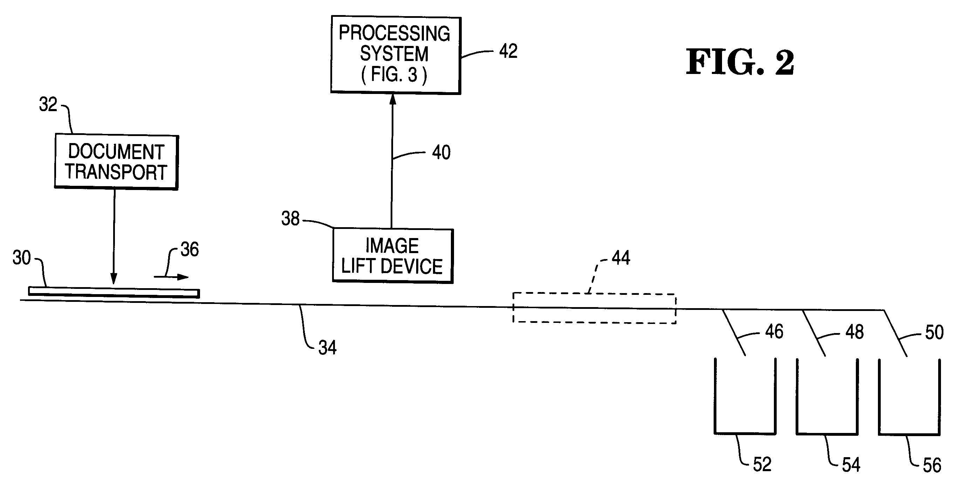

Referring now to Fig. 2, there is shown a diagram illustrating in simplified schematic form the movement of a document 30 through the terminal 10 (Fig. 1). The document 30, after insertion in the document entry slot 16 (Fig. 1) is moved by a document transport system 32 along a feed path 34 in the direction of the arrow 36. The document 30 is fed past an image lift device 38 which senses the document 30 and provides digital signals representative of the sensed areas (pixels) in known manner, such digital signals being supplied over a line 40 to a processing system 42. The document 30 is then fed further along the feed path to a wait station 44 where the document is held while processing takes place in the processing system 42. Following such processing the document 30 may be fed via selected diverting flap 46, 48 or 50 to a respective sorting pocket 52, 54 or 56. Alternatively, the document may be returned by the transport system 32 to the entry slot 16 (Fig. 1) along the feed path 34 in the opposite direction to the arrow 36.

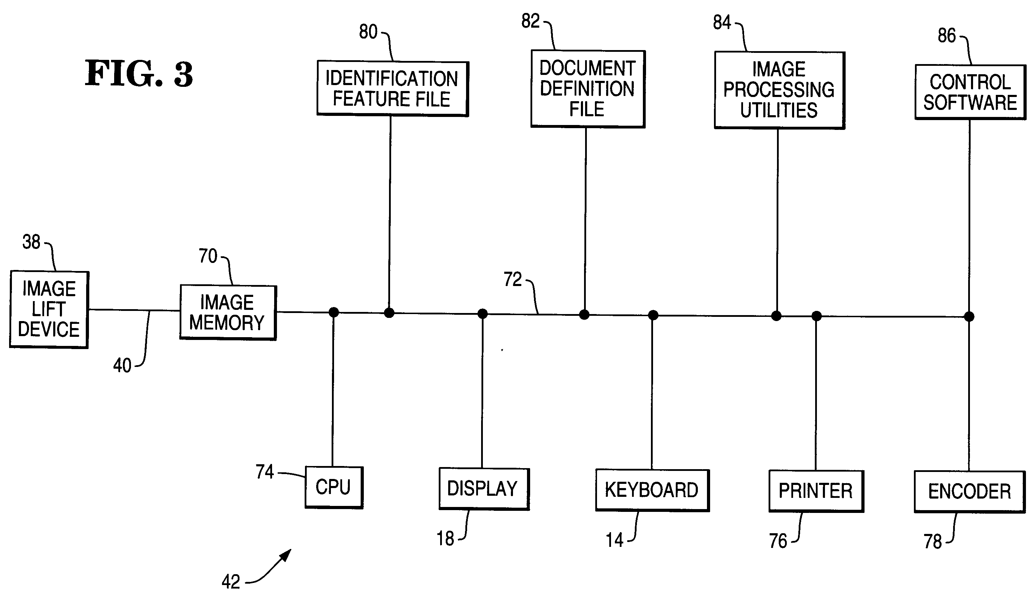

Referring now to Fig. 3, the processing system 42 will be briefly described. As shown in Fig. 3, the image lift device 38 is connected over the line 40 to an image memory 70, which may be a RAM memory. It should be understood that the image lift device 38 is adapted to provide both a binary image (black or white pixels) used for subsequent processing and a grey scale digital image used to provide a visual display of the documents on the display 18. The image memory 70 is connected to a bus 72 to which are connected to a CPU (central processing unit) 74, the display 18 (Fig. 1), the keyboard 14, a printer 76 and an encoder 78. Also connected to the bus 72 are respective memory means containing an identification feature file 80, a document definition file 82, a library of image processing programs (referred to herein as utilities) 84 and control software 86 . The identification feature file 80 contains a document description for each type of document. Each document description, referred to herein as a document feature model, includes a representation of graphical features on the document, specified by their locations and measurements on the document. Examples of graphical features are horizontal lines, vertical lines and boxes. Associated with each document feature model is a document name, identifying the document type.

The document definition file 82 contains a list of document names, each document name being associated with a document description including a list of zones on the document, together with parameters defining the properties of data contained within the respective zones. The control software 86 interprets these parameters to select an appropriate image processing utility from the library of image processing utilities 84.

The image processing utilities contained in the library of image processing utilities 84 are functions which implement a particular method or technique for processing image data and making explicit the information contained within the image.

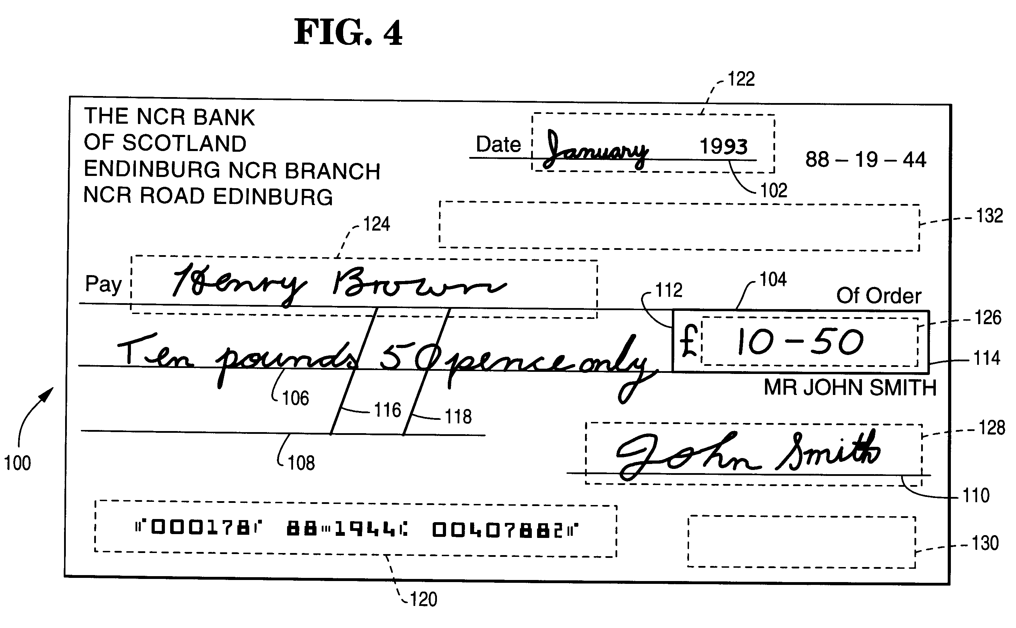

The terminal 10 is adapted to process more than one class of documents. One class of document is a cheque. Referring now to Fig. 4, there is shown a typical cheque 100 capable of being accepted and processed by the terminal 10. The cheque 100 is a printed form containing printed information thereon, and graphical features such as horizontal lines 102, 104, 106, 108, 110, vertical lines 112, 114 and sloping lines 116, 118. The printed information includes a printed code line disposed in a code line zone 120. When inserted into the terminal 10, the cheque 100 also contains handwritten information, including the date written in a date zone 122, the payee's name written in a payee name zone 124, a handwritten amount, a courtesy amount written in figures in a courtesy amount zone 126, and a signature, written in a signature zone 128. Other zones on the cheque 100 are blank when the cheque is inserted in the terminal 10 and may be printed by the printer 76 and/or the encoder 78 during processing of the document in the terminal 10. These zones include an encoding zone 130 and an endorsement zone 132.

It will be appreciated that cheques emanating from a large number of different banks may be processed by the terminal 10. Although such cheques all contain identical types of information, such as payee's name, date, amount, bank code and signature, the actual location of this information may be different for the cheques of different banks.

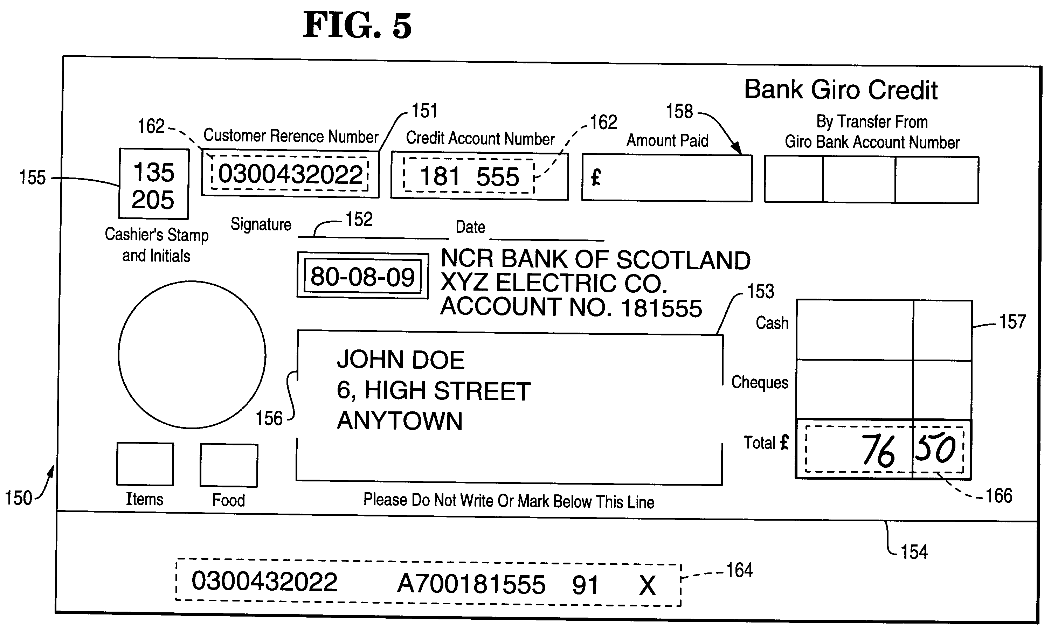

Another class of document which may be processed by the terminal 10 is a bill for payment, such as a bank giro credit for payment of funds to a company such as an electricity supply company, for example. Referring to Fig. 5, there is shown a typical bill for payment which, in the example illustrated, is a bank giro credit form 150. The giro credit form 150 contains printed information thereon, and graphical features including horizontal lines such as the referenced horizontal lines 151, 152, 153, and 154, vertical lines such as the referenced vertical lines 155, 156, and 157 and boxes, such as the box 158. Printed information contained on the form 150 includes a customer reference number contained in a zone 160 the payee's account number contained in a zone 162, and a code line contained in a zone 164. When inserted into the terminal 10, the form 150 will also contain a handwritten entry of the amount to be paid, contained in a zone 166.

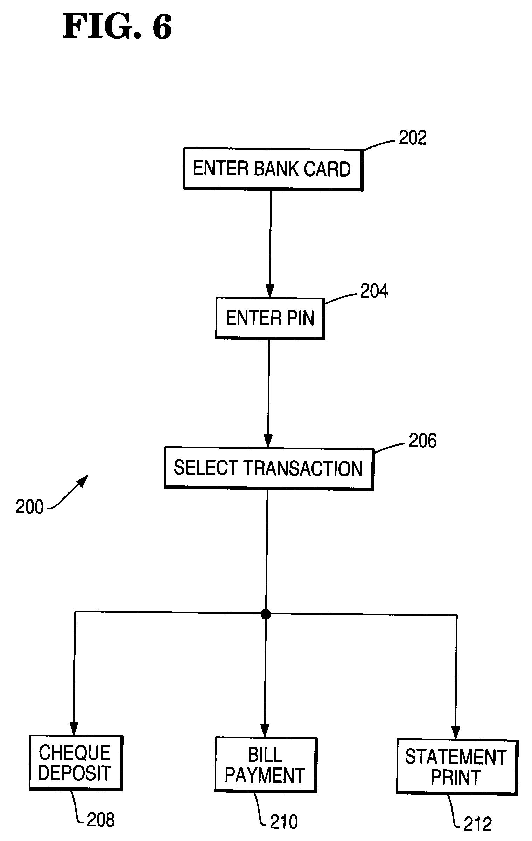

A typical manner in which the terminal 10 is operated by a customer will now be described. Referring to Fig. 6, which shows a transaction flowchart 200, operation is commenced by the customer inserting his bank card in the slot 12 (Fig. 1) as shown in block 202. The customer then enters his PIN (personal identification number ) in the keyboard 14 (block 204), to verify authorized use of the bank card. The customer may select a cheque deposit transaction (block 208), a bill payment transaction (block 210) or a statement print transaction (block 212). The statement print transaction, which causes the terminal 10 to print out a statement of the customer's account is not pertinent to the present invention, and will not be discussed further herein.

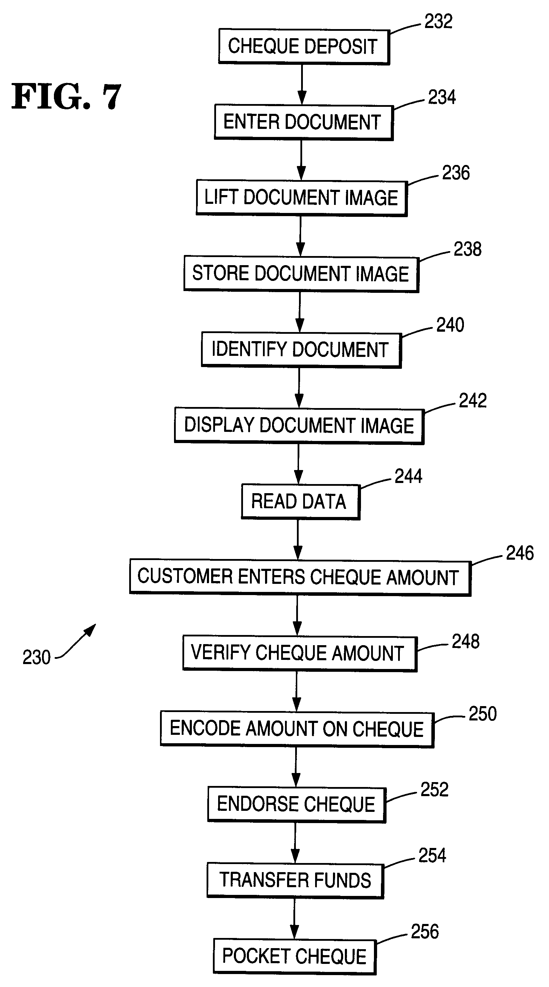

Referring now to Fig. 7, there is shown a flowchart 230 illustrating the operation of the terminal 10 for a typical cheque deposit transaction (block 232). The customer inserts the cheque document into the document entry slot 16 (Fig. 1) (block 234). The image lift device 38 (Figs. 2 and 3) then lifts the document image (block 236) and stores the image in the image memory 70 (Fig. 3) (block 238). The document is then identified (block 240), that is, a procedure is carried out which ascertains the particular cheque type, dependent on which bank or financial institution issued the cheque. The identification procedure will be explained more fully hereinbelow. The document image is then displayed on the display screen 18 (block 242) to reassure the customer that the transaction is proceeding correctly, and to allow the customer to view the displayed document. This display step is optional and may be omitted in some applications. Data is then read from the document image (block 244), the location of the text which is read, and the type of reading utility being specified in the document definition file 82 (Fig. 3) for that document type. The customer then enters the cheque amount on the keyboard 14, and the cheque amount is verified (block 248) by comparing the keyed-in amount with the courtesy amount read from zone 126 (Fig. 4) during the read data step of block 244. The cheque amount is then magnetically encoded on the cheque in zone 130 (Fig. 4) (block 250), and the cheque is endorsed by printing thereon (block 252) in the endorsement zone 132, thereby invalidating the cheque to prevent it being used in a subsequent transaction. As shown in block 254 a funds transfer operation is then effected, wherein the value of the cheque is transferred from the payer's account, the account number of which was read from the code line zone 120 (Fig. 4), to the payee's account, the account number of which was read from the bank card inserted in the slot 12 at the commencement of terminal operation by the customer. Finally (block 256) the cheque is sent to an appropriate pocket 52-56 (Fig. 2).

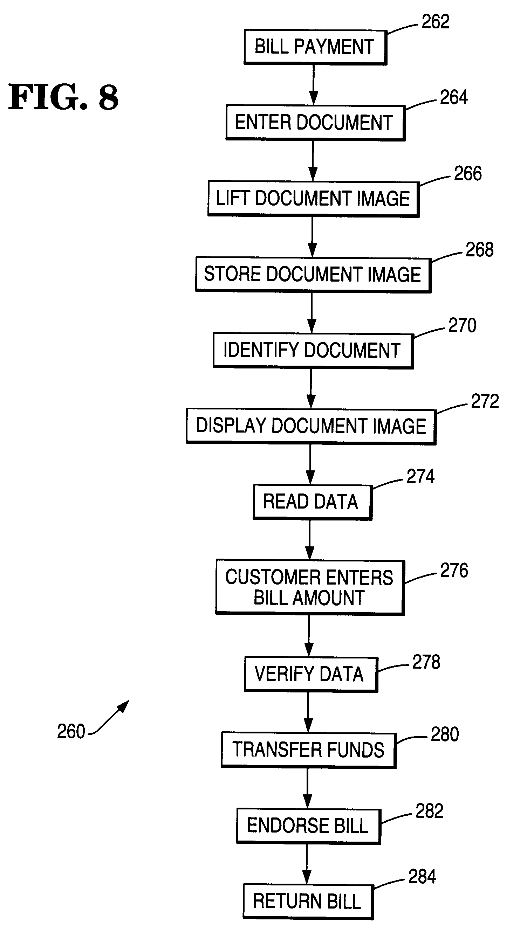

Referring now to Fig. 8, there is shown a flowchart 260 illustrating the operation of the terminal 10 for a typical bill payment transaction (block 262). The customer inserts the bill document into the document entry slot 16 (Fig. 1) (block 264). As in the cheque reading operation the document image is lifted (block 266) and stored (block 268). The document is then identified (block 270) as will be explained more fully hereinbelow. The document image is displayed (block 272), and data is read from the document (block 274), the location of the text being read and the type of reading utility being specified in the document definition file 82 (Fig. 3). The customer then enters the bill amount in the keyboard 14 (block 276), and the bill amount is verified (block 278) by comparing the keyed in amount with the bill amount read from the bill during the read data step of block 274. This customer keyboard entry step 276 and verification step 278 are optional and may be omitted in some applications. The terminal 10 then communicates with the central data processor to effect a transfer of the appropriate funds (block 280). The bill will then be endorsed by printing thereon an appropriate text to indicate that the bill has been paid and the date of payment, for example (block 282), and the endorsed bill is then returned to the customer (block 284).

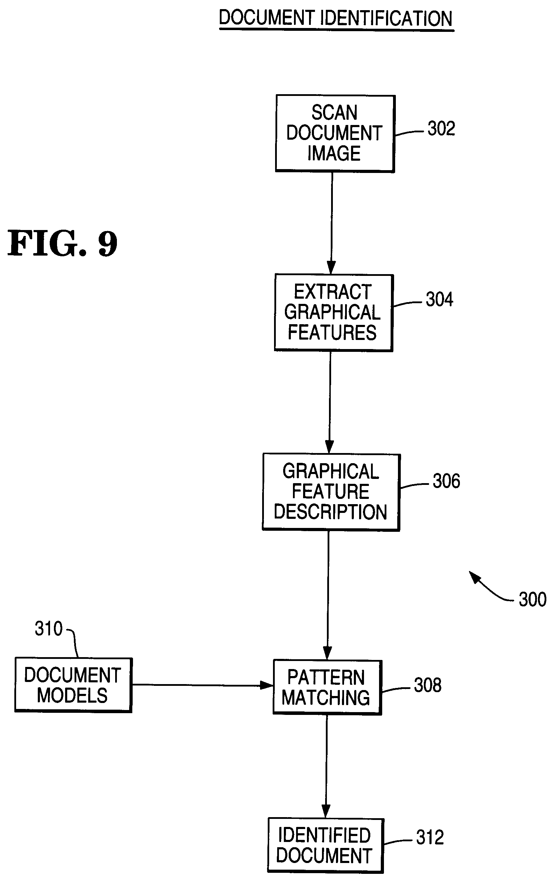

Referring now to Fig. 9, the procedure for identifying a document (block 240 in Fig. 7 and block 270 in Fig. 8) will now be explained. The identification procedure is effected by an algorithm which proceeds according to the flowchart 300 shown in Fig. 9. Thus, the document image stored in the image memory 70 (Fig. 3) is scanned (block 302), and graphical features thereof are extracted (block 304). In the preferred embodiment, the extracted graphical features are linear features, in particular horizontal lines, including the lines 102-110 on the cheque 100 shown in fig. 4 or the lines 151-154 on the bill 150 shown in Fig. 5. However, in alternative arrangements, other graphical features in addition to horizontal lines, such as vertical lines may be extracted. Furthermore, where horizontal and vertical lines are extracted, the locations thereof in the digital image may be utilized to identify further graphical features such as boxes (rectangular areas) or other simple geometrical configurations. The extracted graphical features are then arranged in a feature hierarchy specifying their locations in the digital image and thereby providing a graphical feature description (block 306) constituting a document feature model. This document feature model is then compared (block 308) with document feature models (block 310) extracted from the identification feature file 80. In a preferred comparison procedure, the document feature model derived from the document entered into the slot 16 of the terminal 10 is compared with entries in the identification feature file 80 to identify the best match. Optionally, this match may be tested by ascertaining whether a known feature, such as the existence of a particular printed word or logo for that type of document, is present. If this feature is not present, then the next best match may be chosen as a candidate, and tested for a known feature, and this procedure may be repeated until the document is identified.

It will be appreciated that the identification feature file 80 (Fig. 3) is compiled by extracting graphical features, such as horizontal/vertical lines and/or boxes, from the digital image of a sample document of each type. Thus, as previously discussed, the identification feature file 80 consists of a plurality of document models listing the graphical features being utilized, and their location, together with the appropriate document name.

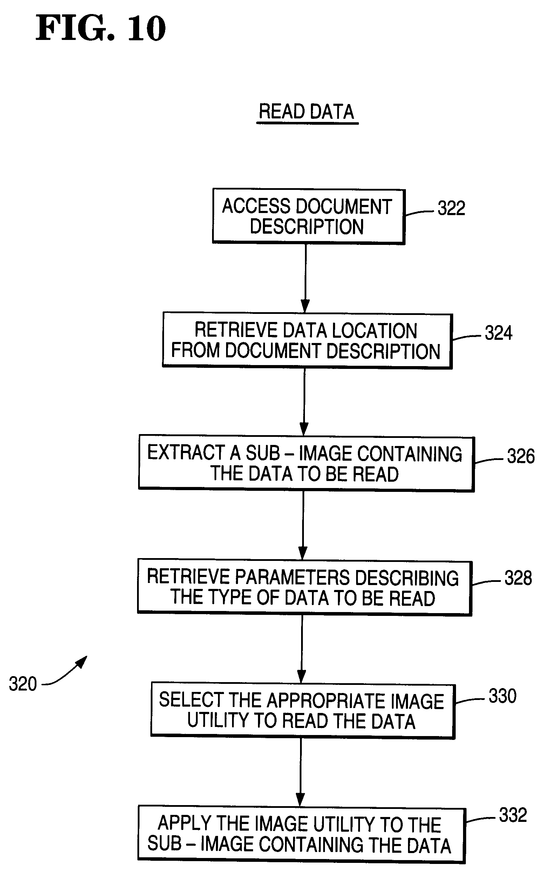

Referring now to Fig. 10, the procedure for reading data from an identified document (block 244 in Fig. 7 and block 274 in Fig. 8) will now be explained. The read data procedure is specified by the flowchart 320. Firstly, using the document name representing the identified document type, the corresponding document description is accessed from the document definition file 82 (Fig. 3). As discussed hereinabove, it is again emphasized that documents of a single class (e.g. cheques) can be of many different types. Thus, there may be many hundreds of different types of cheques in circulation. However, as mentioned all such cheques will contain the same essential information, such as, for example, the payee's name, the amount, bank sort code, account number, date and signature. The variations between cheque types, for example, may be in the position of the data i.e. the location on the document of the zone containing the data and the format of the data i.e. (printed, handwritten, numeric, OCR etc.). For each document type, the document definition file 82 (Fig. 3) contains the relevant data including the location of the zones containing the data and parameters defining the properties of the data.

Proceeding with the flowchart 320, the data location is retrieved from the document description (block 324). Next, as shown in block 326, a sub-image containing the zone or zones which are to be read is extracted from the document image stored in the image memory 70 (Fig. 3). Also retrieved from the document definition file 82 (Fig. 3) are parameters defining the type of data to be read (block 328), on the basis of which the appropriate recognition utility to read the data is selected from the library of image processing utilities 84 (Fig. 3) (block 330). Finally, as shown in block 332, the selected utility is applied to the extracted sub-image zone containing the data, whereby the data is recognized for further processing according to the flowchart 230 (Fig. 7) or the flowchart 260 (Fig. 8). Examples of typical parameters stored in the document definition file 82 are: handwritten, numeric, alphanumeric, fixed/variable length, fixed/variable pitch, font, cursive script, and number of characters. Examples of typical image processing utilities contained in the library 84 are: OCR, constrained handprint, unconstrained handprint, omnifont print and cursive script. Using such utilities, characters, for example, contained in the zone may be recognized.

According to a modification of the described embodiment, one or more zones on the identified document may be processed by image processing utilities which merely validate a zone, rather than read it, for example check that a zone on the document has been completed, e.g. the date zone 122 or the signature zone 128 on the cheque 100 (Fig. 4).

## Claims

1. A method of processing documents of a plurality of types, including the steps of: forming a digital image of a document (30) to be processed; and storing the digital image, characterized by the steps of: extracting from the stored digital image graphical features of said document (30); identifying the document type to which said document (30) belongs on the basis of the extracted graphical features; utilizing the identified document type to select an appropriate stored document description; utilizing the selected document description to select at least one zone of the stored digital image and to select an image processing program; and processing the information contained in the selected zone or zones in the stored image using the selected image processing program.

2. A method according to claim 1, characterized in that said identifying step is effected on the basis of extracted horizontal lines.

3. A method according to claim 2, characterized in that said identifying step is effected on the basis of extracted horizontal lines, vertical lines and boxes.

4. A method according to any one of the preceding claims, characterized in that the selected image processing program is a character recognition program adapted to recognize characters contained in the selected zone.

5. A method according to any one of claims 1 to 3, characterized in that the selected image processing program is a zone validation program adapted to check that a zone on the document has been completed.

6. A method according to any one of the preceding claims, characterized by the step of displaying the stored digital image on display means (18).

7. Apparatus for processing documents of a plurality of types, including transport means (32) adapted to move a document (30); imaging means (38) adapted to provide digital image signals representing an image of said document (30); and image storage means (70) adapted to store said image signals, characterized by processing means (74) coupled to said image storage means (70) and adapted to extract graphical features from the stored image of said document (30) and to compare the extracted graphical features with corresponding graphical features associated with a plurality of document feature models arranged in a first file (80) stored in first memory means, to identify the document type to which the document (30) belongs; second memory means for storing a second file (82) of document zone descriptions and adapted to provide location information for at least one zone on the document (30) containing data to be processed and parameters defining the properties of data contained within the respective zones; third memory means for storing a library of image processing programs (84) for performing image processing functions, and control means (86) adapted to utilize said parameters to select an appropriate image processing program from said library of image processing programs for processing the data contained in said at least one zone.

8. Apparatus according to claim 7, characterized in that the selected image processing program is a character recognition program.

9. Apparatus according to claim 7 or claim 8, characterized by display means (18), responsive to the stored digital image of said document (30) to provide a visual display of said document (30).
